# DEMANDE DE BREVET EUROPEEN

(11) **EP 1 369 774 A1**
(43) Date de publication de la demande: **10.12.2003**
(21) Numéro de dépôt: 02291405.5
(22) Date de dépôt: 06.06.2002
(51) Int. Cl.: G06F 9/318, G06F 9/355

(54) **Dispositif d'élaboration d'adresses pour un processeur de signaux numériques**

(71) Demandeur: CSEM Centre Suisse d'Electronique et de Microtechnique SA Recherche et Développement, 2007 Neuchâtel (CH)
(72) Inventeur: Rampogna, Flavio, 1227 Geneve (CH); Pfister, Pierre-David, 2605 Sonceboz (CH); Masgonty, Jean-Marc, 2074 Marin (CH); Piguet, Christian, 2000 Neuchatel (CH)
(74) Mandataire: Caron, Gérard

(57) **Abrégé**

Les instructions de programme utilisées dans ce dispositif comprennent un code d'élaboration (CE) des adresses pour l'accès à une mémoire (7) associée au processeur. A chacun des registres d'adresse (ax0 à ax3; ay0 à ay3) sont associés un registre d'offset (ox0 à ox3; oy0 à oy3) et un registre de modulo (mx0 à mx3; my0 à my3). Un circuit de calcul d'adresses (28) calcule chaque adresse d'accès à la mémoire (7) sur la base de codes d'opération désignés par le code d'élaboration d'adresses (CE) des instructions et du contenu d'un registre d'adresse (ax0 à ax3; ay0 àay3) et de ses registres associés (0x0 à ox3; oy0 à oy3; mx0 à mx3; my0 à my3).

Chaque code d'élaboration (CE) définit l'un des codes d'opération à envoyer au circuit de calcul (28) et désigne le registre d'adresse dont le contenu doit subir l'opération de calcul. Des moyens de commande assurent les transferts des contenus des registres et du code d'opération vers le circuit de calcul (28).

Selon l'invention, chaque registre d'adresse (ax0 à ax3; ay0 à ay3) est associé à un registre de configuration (cx0 à cx3; cy0 à cy3) qui est désigné en même temps que ce registre d'adresse par le code d'élaboration d'adresses (CE), et chaque registre de configuration (cx0 à cx3; cy0 à cy3) contient au moins un jeu de codes d'opération prédéfinis, chaque code d'opération étant à même de commander une opération de calcul prédéterminée dans le circuit de calcul (28).

## Description

La présente invention est relative à un dispositif d'élaboration des adresses d'accès à la mémoire dans un processeur dit DSP (acronyme pour Digital Signal Processor ou Processeur de Signaux Numériques), dispositif qui présente le type générique défini dans le préambule de la revendication 1.

Dans les processeurs DSP, l'adressage de la ou des mémoires de données et de coefficients est primordial. Pour cette raison, les processeurs DSP comprennent des mécanismes d'élaboration d'adresses très complexes "automatiques" qui travaillent en parallèle avec des mécanismes exécutant les opérations arithmétiques. Les possibilités d'adressage des mémoires les plus typiques mises en oeuvre dans les processeurs DSP actuels sont celles qui utilisent à la fois un registre d'adresse ou d'index, un registre dit d"'offset" et un registre modulo. Ainsi, une mémoire est adressée par un registre d'adresse, la valeur du registre d'adresse pouvant être modifiée à chaque accès par la ou les valeurs contenues dans le registre d'offset et/ou modulo.

Par ailleurs, les processeurs DSP comportent en général deux dispositifs d'élaboration d'adresses qui alimentent simultanément l'unité arithmétique et qui fonctionnent avec deux mémoires distinctes. Ainsi par exemple, on peut multiplier deux valeurs et ajouter le résultat à une valeur d'un registre accumulateur moyennant l'appel à une seule instruction de programme.

Cependant, ce fonctionnement nécessite des instructions longues présentant un grand nombre de bits et par voie de conséquence un matériel coûteux.

Ainsi, une instruction doit notamment spécifier:
- l'opération arithmétique à effectuer,
- dans quel registre le résultat doit être placé,
- la désignation du registre d'adressage adéquat pour la mémoire 1,
- l'opération à effectuer sur le contenu de ce registre d'adressage,
- la désignation du registre d'offset adéquat,
- la désignation du registre de modulo adéquat,
- la désignation d'un autre registre d'adressage adéquat pour la mémoire 2,
- l'opération à effectuer sur le contenu de cet autre registre d'adressage,
- la désignation du registre d'offset adéquat à associer à cet autre registre,
- la désignation du registre de modulo adéquat à associer à cet autre registre,

Pour éviter une taille trop importante des instructions, on se voit donc contraint à limiter les possibilités des processeurs DSP à ce dont ils ont strictement besoin pour exécuter un certain nombre d'algorithmes bien spécifiques, excluant ainsi une souplesse d'utilisation des processeurs DSP. On se résigne par exemple à imposer les limitations suivantes:
- faible nombre d'opérations arithmétiques,
- faible nombre de registres de stockage
- faible nombre de registres d'adressage,
- faible nombre d'opérations sur les registres d'adressage,
- sélection figée des registres d'offset et de modulo associés de façon non modifiable à leur registre d'adressage.

L'invention a pour but de fournir un dispositif d'élaboration d'adresses permettant de s'affranchir d'au moins certaines des limitations énoncées ci-dessus et d'obtenir une souplesse dans le choix des algorithmes exécutables, moyennant l'utilisation d'instructions d'une longueur nettement plus faible que celle des instructions utilisées classiquement dans les processeurs DSP.

L'invention a donc pour objet un dispositif d'élaboration d'adresses tel que défini dans la partie caractérisante de la revendication 1.

Grâce à ces caractéristiques, une instruction de programme ne nécessite pour définir les opérations de calcul des adresses qu'un nombre minimal de bits, la partie restante des instructions pouvant être affectée à l'accomplissement d'autres fonctions.

Des développements avantageux de l'invention sont définis dans les sous-revendications.

D'autres caractéristiques et avantages de la présente invention apparaîtront au cours de la description qui va suivre, donnée uniquement à titre d'exemple et faite en se référant aux dessins annexés sur lesquels:
- la figure 1 est schéma symbolique de l'architecture générale d'un processeur DSP dans lequel le procédé selon l'invention peut être mis en oeuvre;
- la figure 2 est une représentation symbolique de certains registres et jeux de registres utilisés dans le processeur DSP de la figure 1;
- les figures 3 et 4 montrent la répartition des champs de certains registres illustrés sur la figure 2;
- la figure 5 est un schéma symbolique d'une unité d'élaboration d'adresses utilisée dans le processeur DSP de la figure 1; et
- les figures 6 à 8 sont des schémas symboliques similaires à celui de la figure 5 et montrant la circulation des informations dans trois modes spécifiques d'élaboration d'adresses.

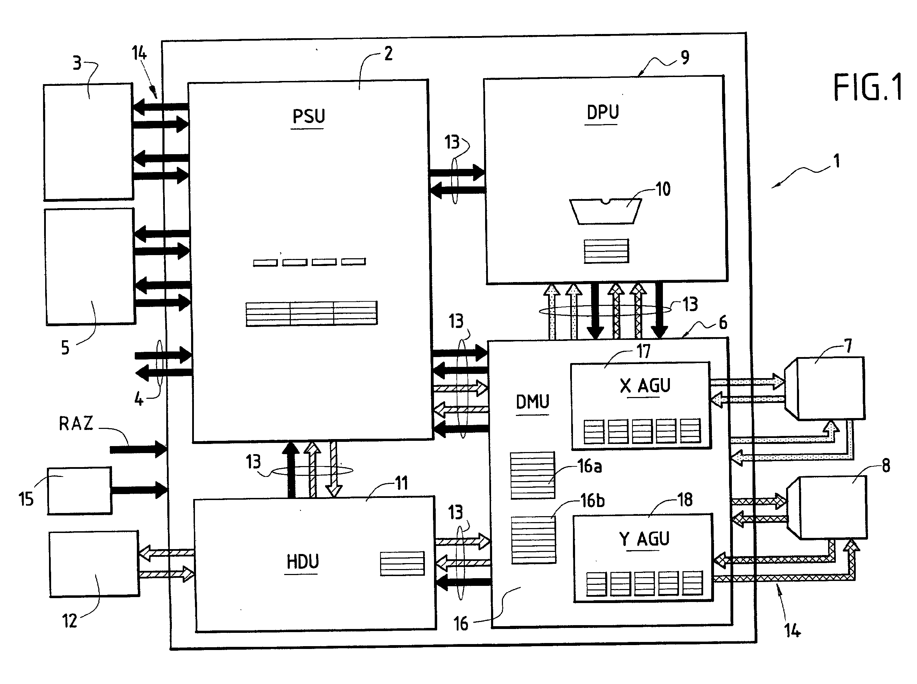

Sur la figure 1, on a représenté un exemple d'architecture globale d'un processeur DSP 1 comportant un dispositif d'élaboration d'adresses selon l'invention. Ce processeur comprend essentiellement quatre unités fonctionnelles, à savoir:
a) une unité de séquencement de programme 2 appelée aussi PSU (pour Program Sequencing Unit); elle gère l'extraction des instructions de programme d'une mémoire de programme 3 et assure le décodage des instructions et l'exécution des branchements, des appels à des sous programmes, des interruptions de programme commandées de l'extérieur et transitant sur un bus 4 etc. Elle communique avec une mémoire vive 5 (appelée aussi Hardware Stack) dans laquelle sont mémorisées les adresses de retour, (notamment de sous programmes et d'exceptions) et l'état des boucles.
b) une unité d'élaboration d'adresses et de gestion de données 6 (appelée aussi DMU pour Data Move Unit) dont le rôle et la structure constituent plus particulièrement l'objet de l'invention et dont une description détaillée sera donnée plus loin. Cette unité 6 communique avec deux mémoires de données 7 et 8 dont elle assure l'adressage et l'extraction de données.
c) une unité de traitement de données 9 appelée également DPU (pour Data Processing Unit) et comprenant notamment une unité arithmétique et logique 10 (ALU). Cette unité 9 est agencée pour pouvoir exécuter selon les besoins des algorithmes divers destinés à des applications aussi variées que l'analyse sonore ou d'image, le calcul de matrices et de vecteurs et autres.
d) une unité 11 de communication avec un processeur extérieur appelé aussi HDU (pour Host and Debug Unit). Cette unité 11 peut assurer la communication avec un processeur extérieur 12 par exemple pour charger des instructions de programme et/ou des données dans les mémoires 3, 7 et 8 par l'intermédiaire du processeur 1, ou encore servir à transférer des paramètres ou exercer des contrôles d'état concernant l'exécution des algorithmes dans le processeur 1. Une fonction de réparation de logiciel peut également être assurée par l'intermédiaire de l'unité 11.

Il est à noter que les unités 2, 9 et 11 sont connues des spécialistes et n'ont pas de rapport direct avec l'invention. Elles ne seront donc pas décrites plus en détail.

Le processeur 1 comporte des bus internes 13 et externes 14 faisant respectivement communiquer les uns avec les autres les unités et les périphériques qui viennent d'être mentionnés. Une horloge 15 cadence les opérations.

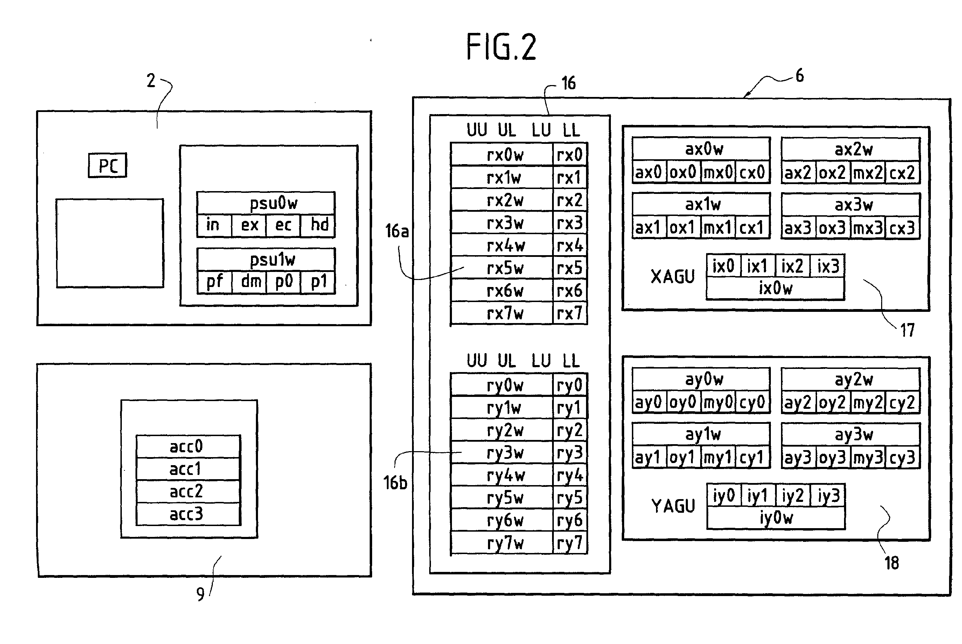

L'unité d'élaboration d'adresses 6 comprend une unité de manipulation de données 16 formées de deux groupes de registres 16a et 16b (voir aussi la figure 2) dits d'application générale, qui coopèrent respectivement avec les mémoires 7 et 8 avec lesquelles ils peuvent échanger des données au cours de l'exécution du programme. Les registres d'application générale 16a et 16b peuvent également être utilisés comme registres temporaires lors de transferts de données entre les diverses unités du processeur 1 et les mémoires 7 et 8. Ils peuvent également contenir des opérandes pour l'unité de traitement de données 9.

Dans le mode de réalisation décrit à propos de la figure 1, le processeur 1 utilise, comme connu en soi, un adressage double ce qui permet d'accéder en parallèle à deux valeurs stockées en mémoire ou dans les registres qui sont simultanément appliquées aux registres et à l'unité DPU 9. Par exemple, les deux valeurs peuvent être multipliées et le résultat de la multiplication pourra être transféré dans un registre d'accumulation prévu dans l'unité de traitement de données 9. C'est pour cette raison que le processeur 1 comporte les deux mémoires de données 7 et 8 et, par voie de conséquence, l'unité d'élaboration d'adresses comprend deux dispositifs d'élaboration d'adresses travaillant en parallèle et désignées respectivement par les références 17 et 18, ces dispositifs, étant appelés également X AGU et Y AGU (AGU pour Address Génération Unit), sont conçus conformément à des caractéristiques essentielles de l'invention. Toutefois, un dispositif d'élaboration d'adresses selon l'invention peut également s'avérer utile dans un processeur conçu pour travailler avec un simple adressage.

Les dispositifs 17 et 18 sont utilisés pour engendrer des adresses permettant d'accéder indirectement à leur mémoire 7 ou 8 associée par l'intermédiaire de registres. Comme ils ont une structure identique, on n'en décrira qu'un seul, en l'occurrence le dispositif 17.

La figure 2 montre que le dispositif 17 comprend cinq groupes ax0w à ax3w et ix0w de chacun quatre registres. Les registres ax0w à ax3w comprennent chacun:
- un registre d'adresses de base ou registre d'index désigné respectivement par ax0, ax1, ax2 et ax3. Ils sont destinés à contenir l'adresse de mémoire de données à laquelle il sera accédé dans le cas d'un accès indirect à la mémoire de données 7.
- un registre d'incrément/décrément dit d'offset désigné respectivement par ox0, ox1, ox2, ox3. Ils contiennent la valeur d'incrément/décrément de l'adresse de base, lorsque celle-ci doit être modifiée ultérieurement au cours de l'exécution du programme.
- un registre modulo désigné respectivement par mx0, mx1, mx2, mx3. Ces registres permettent de spécifier une valeur modulo associée à une adresse modifiée ultérieurement lorsqu'il s'agit d'exécuter une adresse indirecte de mémoire de données impliquant une modification d'adresse ultérieure.
- un registre dit de configuration désigné respectivement par cx0, cx1, cx2 et cx3. Ces registres sont utilisés pour configurer les opérations d'accès indirect à la mémoire de données 7 pour les index correspondants.

Le cinquième groupe ix0w de registres comprend quatre registres dits d'instructions étendues désignés respectivement par ix0, ix1, ix2 et ix3.

On remarquera également sur la figure 2 que les registres des jeux 16a et 16b sont numérotés respectivement de rx0 à rx7 ou de ry0 à ry7 lorsqu'ils contiennent un seul mot de données et de rx0w à rx7w ou ry0w à ry7w lorsqu'ils contiennent quatre mots de données à la fois, l'utilisation du nombre de mots étant optionnelle (fonction du programme) et dépendant des algorithmes à exécuter par le processeur 1.

Il est à noter que les registres présents dans les unités 2 et 9 ont également été représentés sur la figure 2. Cependant, comme ils ne concernent pas directement l'invention, on ne les décrit pas en détail.

Selon un mode de réalisation préféré de l'invention, la largeur des registres qui viennent d'être décrits correspond à la largeur des mots de données utilisés dans le processeur 1, une largeur de 24 bits étant préférée, à l'exception de celle des registres de configuration cx0 à cx3 qui ont de préférence une largeur de 20 bits.

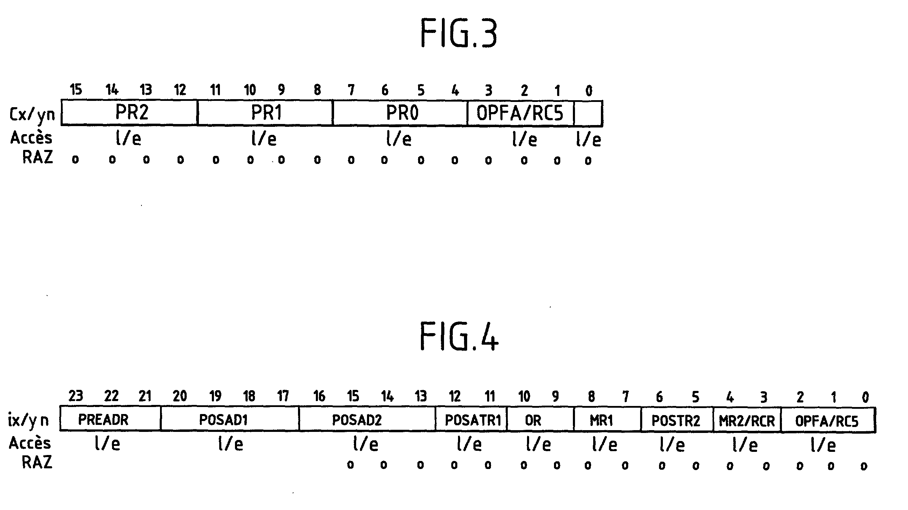

Le tableau 1 ci-dessous expose un exemple de ce que peut contenir un registre de configuration parmi les registres cx0 à cx3, tandis que la figure 3 montre la répartition des champs et un exemple du contenu d'un tel registre, celui-ci étant référencé cx/yn signifiant qu'il s'agit d'un registre de configuration n parmi quatre registres de configuration respectivement pour les unités XAGU et YAGU. La figure 3 indique également que tous les champs peuvent travailler en lecture/écriture. Une écriture peut être effectuée par des instructions de programme spécialement prévues à cet effet et ayant pour but de modifier, en fonction des besoins, le contenu du registre concerné. Par ailleurs, toutes les positions du registre peuvent être remises à l'état initial à la valeur "O".

**TABLEAU 1**

| **CHAMP** | **FONCTION** | **BIT/ CHAMP** | **DESCRIPTION** | | | |
|---|---|---|---|---|---|---|
| **PR0** | Opération Prédéfinie | 4 bits | 0 | an=an+1 (sam) | 1 | an=an-1 (sam) |
| | | | 2 | an=an+on (sam) | 3 | an=an-on (sam) |
| | | | 4 | an=(an+on)%mn (sam) | 5 | an=(an-on)%mn (sam) |
| | | | 6 | addr=an+on,an=an+on | 7 | an=an+OFFA (sam) |
| | | | 8 | addr=an, an=an+1 | 9 | addr=an·1, an=an-1 |
| | | | A | addr=an, an=an+on | B | addr=an, an=an·on |
| | | | C | addr=an, an=(an+on)%mn | D | addr=an, an=(an-on)%mn |
| | | | E | addr=an | F | addr=an, an=an+OFFA |
| **PR1** | Opération prédéfinie | 4 bits | 0 | an=an+1 (sam) | 1 | an=(an+1)%mn (sam) |
| | | | 2 | an=an+on (sam) | 3 | an=(an+1)%mn+OFFA(sam=) |
| | | | 4 | an(an+on)%mn (s.am) | 5 | an=(an+on)%mn+OFFA (sam) |
| | | | 6 | addr=an+on, an=an+on | 7 | an=an+OFFA)%mn+1 (sam) |
| | | | 8 | addr=an, an=an+1 | 9 | addr=an, an=(an+1)%mn |
| | | | A | addr=an, an=an+on | B | addr=an, an=(an+1 )%mn+OFFA |
| | | | C | addr=an, an(an+on)%mn | D | addr=an, an=(an+on)%mn+OFFA |
| | | | E | addr=an | F | addr=an, an=(an+OFFA)%mn+1 |
| **PR2** | Opération prédéfinie | 4 bits | 0 | an=an+1 (sam) | 1 | an=(an+1)%mn (s.a.m.) |
| | | | 2 | an=an+OFFA (sam) | 3 | an=(an+1)%mn+OFFA (sam) |
| | | | 4 | an=(an+OFFA)%mn (sam) | 5 | an=(an+on)%mn+OFFA (sam) |
| | | | 6 | addr=an+OFFA, an=an+OFFA | 7 | an=(an+OFFA)%mn+1 (sam) |
| | | | 8 | addr=an, an=an+1 | 9 | addr=an; an=(an+1)%mn |
| | | | A | addr=an, an=an+OFFA | B | addr=an, an=(an+l)%mn+OFFA |
| | | | C | addr=an, an=(an+OFFA)%mn | D | addr=an, an=(an+on)%mn+OFFA |
| | | | E | addr=an | F | addr=an, an=(an+OFFA)%mn+1 |
| **OFFA** | OFFset B N'est utilisée qu'avec une opération étendue | 3 bits | 0 | 1 | 1 | 2 |
| | | | 2 | 3 | 3 | 4 |
| | | | 4 | -4 | 5 | -3 |
| | | | 6 | -2 | 7 | -1 |
| **W** | Transfert de Données Mémoire larges | 1 bit | 0 | Mot Etroit | 1 | Mot Large |

Dans ce tableau, on désigne par:
- an le contenu du registre d'adresse à engendrer,
- on le registre d'offset associé au registre de configuration concerné,
- %mn le registre modulo associé au registre de configuration concerné,
- sam sans accès mémoire

Les exemples suivants faciliteront la lecture du tableau 1.

La valeur C (en hexadécimal) du champ PRO signifie que l'adresse sera déterminée par la somme du contenu du registre d'index an et de la valeur on du registre offset associé multiplié par la valeur %mn du registre modulo associé.

La valeur F du champ PRO signifie que l'adresse sera égale à la valeur du registre d'index an majorée du contenu du champ OFFA.

Le tableau 2 ci-dessous expose un exemple de ce que peut contenir un registre d'instructions étendues parmi les registres ix0 à ix3, tandis que la figure 4 montre la répartition des champs et un exemple possible du contenu des champs d'un tel registre. De façon analogue à la figure 3, le registre d'instructions étendues représenté sur la figure 4 est référencé ix/yn signifiant qu'il s'agit d'un registre n parmi quatre registres d'instructions étendues respectivement pour les unités XAGU et YAGU. La figure 4 indique également que tous les champs peuvent travailler en lecture/écriture. De même que pour les registres de configuration, une écriture peut être effectuée par des instructions de programme spécialement prévues à cet effet et ayant pour but de modifier, en fonction des besoins le contenu du registre concerné. Par ailleurs, certaines positions du registre peuvent être remises à l'état initial à la valeur "O". Dans l'exemple décrit, il est supposé qu'une instruction étendue est définie sur 24 bits.

**TABLEAU 2**

| **CHAMP** | **FONCTION** | **BITS** | **DESCRIPTION** | | | |
|---|---|---|---|---|---|---|
| **PREAD** | Élaboration d'adresse prémodifiée pour accès à la mémoire courant; partie de l'instruction | 3 bits | 0 | addr=**axlyn** | 1 | addr= **ax\|yn**+OFFB |
| | | | 2 | addr= **ax\|yn**+MR1 | 3 | addr= **ax\|yn**-MR1 |
| | | | 4 | addr_{MSB}=**ax\|yn**_{MSB}, addr_{LSB}=**shr(ax\|yn**_{LSB}) LSB=log2(MR)->addr_{log2}(MR)=C | 5 | addr= **ax\|yn**+OR |
| | | | 6 | addr= **ax\|yn**-OR | 7 | |
| **POSAD1** | Elaboration d'adresse postmodifiée; Première partie de l'instruction étendue | 4 bits | 0 | RES1= **ax\|yn**+MR1 | 1 | RES1= **ax\|yn**-MR1 |
| | | | 2 | RES1= **ax\|yn**+OR | 3 | RES1= **ax\|yn**-OR |
| | | | 4 | RES1=**ax\|yn**+MR2 | 5 | RES1= **ax\|yn**-MR2 |
| | | | 6 | RES1= **ax\|yn**+OFFB | 7 | "0" |
| | | | 8 | RES1=**(ax\|yn**+OR)%MR1 | 9 | RES1=**(ax\|yn**- |
| | | | A | RES1=**(ax\|yn**+OFFB)%MR1 | B | addr_{MSB}= **ax\|yn**_{MSB}, addr_{LSB} =0 LSB=log2(MR) |
| | | | C | RES1=**(ax\|yn**+1)%MR1 | D | RES1=**(ax\|yn**- |
| | | | E | **ax\|yn**+RCS | F | OR+RCS |
| **POSAD2** | Elaboration d'adresse postmodifiée; Deuxième partie de l'instruction étendue | 4 bits | O | RES2=RES1+1 | 1 | RES2=RES1-1 |
| | | | 2 | RES2=RES1+OFFB | 3 | RES2=RES1+MR2 |
| | | | 4 | RES2=RES1-MR2 | 5 | RES2=RES1+2*MR2 |
| | | | 6 | RES2= (MR1,#IMM4) | 7 | RES2= |
| | | | 8 | RES2= (RES1,#IMM4) | 9 | RES2= (OR,#lMM4) |
| | | | A | RES2=AR | B | RES2=OR |
| | | | C | RES2=MR2 | D | RES2=OR+MR2 |
| | | | E | RES2=OR+OFFB | F | RES2=MR2+OFFB |
| **POSTR1** | Registre de destination de POSAD2-RES2 | 2 bits | 0 | | 1 | **ax\|yn**=RES1 |
| | | | 2 | OR-RES1 | 3 3 | MR2=RES1 |
| **POSTR2** | Registre de destination POSAD2-RES2 | 2 bits | 0 | MR1=RES2 | 1 | **ax\|yn**=RES2 |
| | | | 2 | OR+RES2 | 3 | MR2=RES2 |
| **OR** | Registre d'offset ox/yn | 2 bits | 0 | ox\|y0 | 1 | ox\|y1 |
| | | | 2 | ox\|y2 | 3 | ox\|y3 |
| **MR1/2** | Registre modulo mx/yn | 2bits | 0 | mx\|y0 | 1 | mx\|y1 |
| | | | 2 | mx\|y2 | 3 | mx\|y3 |
| **OFFB** | Offset (-64... +64) | 7 bits | 0 | 1 | 1 | 2 |
| | | | 2 | 3 | 3 | 4 |
| | | | 4 | -4 | 5 | -3 |
| | | | 6 | -2 | 7 | -1 |
| **RCR** | Sélection du radix de retenu inverse | 2 bits | 0 | radix-2 | 1 | radix-4 |
| | | | 2 | Réservé | 3 | Réservé |
| **RCS** | Dimension d'intervalle de retenu inverse radix-2/radix-4 | 3 bits | 0 | Dimension d'intervalle 2⁴/2⁴ | 1 | Dimension d'intervalle 2⁵/2⁶ |
| | | | 2 | Dimension d'intervalle 2⁶/2⁸ | 3 | Dimension d'intervalle 2⁷/2¹⁰ |
| | | | 4 | Dimension d'intervalle 2⁸/2¹² | 5 | Dimension d'intervalle 2⁹/2¹⁴ |
| | | | 6 | Dimension d'intervalle 2¹⁰/2¹⁶ | 7 | Dimension d'intervalle 2¹¹/2¹⁸ |

Ce tableau se lit de la même façon que le tableau 1, étant entendu que les notations RES 1 ou 2 signifient respectivement "résultat 1" ou "résultat 2".

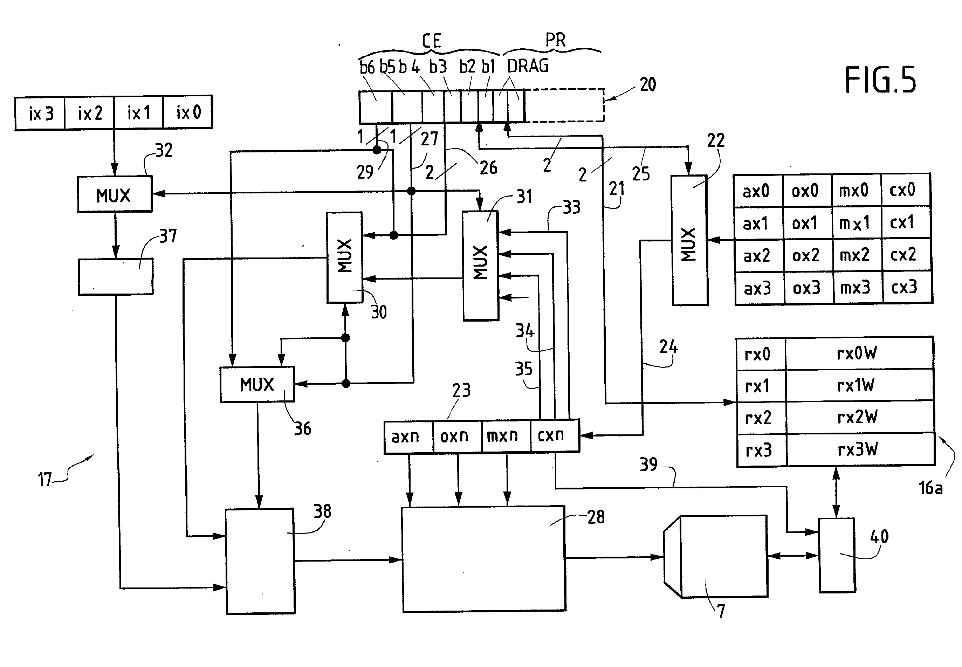

La figure 5 montre un schéma détaillé de l'unité d'élaboration d'adresses 17 (XAGU), étant rappelé que l'unité d'élaboration d'adresses 18 (YAGU) présente la même structure. Cette dernière ne sera donc pas décrite en détail.

L'instruction de programme provenant de l'unité 2 de séquencement est supposée être placée dans un registre 20, comprenant un champ dans lequel est chargée la partie des instructions contenant le code d'élaboration d'adresses CE utilisé dans le dispositif selon l'invention. Bien entendu, le registre 20 peut contenir la partie restante PR des instructions (non représentée), généralement d'une étendue nettement plus grande que celle du code d'élaboration d'adresses CE, une instruction pouvant être définie au total sur 32 bits par exemple. Dans l'exemple décrit, le code d'élaboration d'adresses CE présente une étendue de six bits numérotés de b1 à b6. Le dispositif d'élaboration d'adresses 17 n'utilise donc pour fonctionner que six bits d'une instruction.

Dans chaque instruction, la partie PR non affectée à l'élaboration des adresses comprend deux bits DRAG de désignation de registres d'application générale permettant de sélectionner dans un jeu de registres, un registre d'application générale rx0 à rx3 ou rx0w à rx3w (dans la version étroite ou large) par l'intermédiaire d'une ligne 21.

Deux bits b1 et b2 du code d'élaboration d'adresses CE sont transférés par une ligne 25 à un multiplexeur 22 qui permet ainsi, en fonction de la valeur des deux bits, de choisir lequel des quatre registres d'index ou d'adresse ax0 à ax3 et leurs registres d'offset, de modulo et de configuration respectivement associés, sera utilisé pour l'élaboration d'une adresse à un instant donné du déroulement du programme. Le multiplexeur 22 place le continu des registres choisis dans un registre temporaire 23 par l'intermédiaire d'une ligne 24.

Deux autres bits b3 et b4 du code d'élaboration d'adresse apparaissant sur une ligne 26 sont destinés à définir des opérations qui seront exécutées pour le calcul d'adresses. Le processus de commande initié par ces bits sera expliqué plus loin.

Un autre bit b5 apparaissant sur une ligne 27 définit l'alternative entre une opération de base ou une opération prédéfinie d'une part et une opération étendue d'autre part, toutes ces opérations étant mises en oeuvre dans un circuit de calcul d'adresses 28 à logique câblé qui applique ces opérations aux contenus des registres d'index et les registres associés d'offset et de modulo sélectionnés par l'intermédiaire du multiplexeur 22 et placés dans le registre 23. L'adresse calculée dans le circuit 28 sert directement à l'adressage de la mémoire 7.

Enfin, un dernier bit b6 du code d'élaboration d'adresses apparaissant sur une ligne 29 définit l'alternative entre une opération prédéfinie et une opération étendue.

La valeur des bits b3 et b4 positionne également deux multiplexeurs 31 et 32. Le multiplexeur 31 est destiné à la sélection d'un champ parmi les trois champs PR0, PR1 et PR2 définissant des opérations prédéfinies faisant partie du contenu d'un registre de configuration cx0 à cx3, les codes de ces champs étant respectivement transférés sur les lignes 33, 34 et 35. La sortie du multiplexeur 31 constitue l'une des entrées du multiplexeur 30.

La valeur du bit b5 est appliquée à l'entrée de commande du multiplexeur 30 et à celle d'un autre multiplexeur 36 dont elle constitue aussi l'une des entrées. L'autre entrée de ce multiplexeur est constituée par la valeur du bit b6, celui-ci formant également l'une des entrées du multiplexeur 30.

Le multiplexeur 32 est destiné à sélectionner le contenu de l'un des registres d'instructions étendues ix0 à ix3 en fonction de la valeur des bits b3 et b4. Ce contenu est placé dans un registre temporaire 37 qui le transfère à un circuit 38 de multiplexage et de transcodage positionné par la sortie du multiplexeur 36. Ce circuit forme le signal d'opération avec lequel doit travailler le circuit de calcul d'adresses 28.

Le bit du champ W (voir tableau 1) des registres de configuration cx0 à cx3 est transféré par l'intermédiaire du registre 23 et d'une ligne 39 à un circuit 40 de détermination de mots de données étroits ou larges. Ce circuit est relié à la fois aux registres d'application générale et à la mémoire 7.

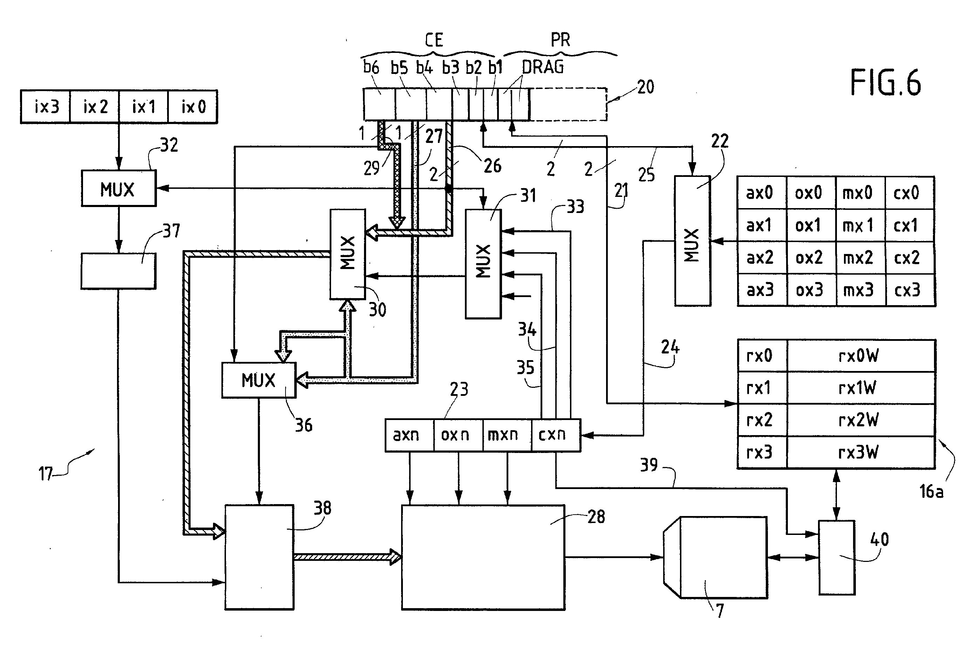

L'unité 17 peut ainsi fonctionner sur trois modes différents qui sont respectivement illustrés sur les figures 6, 7 et 8 et qui sont le mode de base, le mode prédéfini et le mode étendu. On va maintenant examiner successivement ces modes de fonctionnement, étant entendu que la circulation des divers types d'informations apparaît en traits doubles larges identifiés chaque fois par un hâchurage particulier.

Dans le mode de base (figure 6), le code d'opération du calcul mis en oeuvre dans le circuit de calcul 28 est contenu directement dans le code d'élaboration d'adresses de l'instruction de programme. Il s'agit des sept opérations de base et du code NOP (pas d'opération) définies les bits b3, b4 et b6. Les multiplexeurs 30 et 36 sont alors transparents par la valeur de ces trois bits sous la commande du bit b5. Le code d'opération est appliqué au circuit de multiplexage et de transcodage 38 qui est également transparent pour ce code par l'application de la valeur du bit b5. Le code d'opération de base est donc appliqué au circuit de calcul 28 qui effectue le calcul sur les contenus des registres d'index, d'offset et de modulo stockés dans le registre temporaire 23 au moment considéré. Ces contenus ont été sélectionnés par la valeur des bits b1 et b2 positionnant le multiplexeur 22.

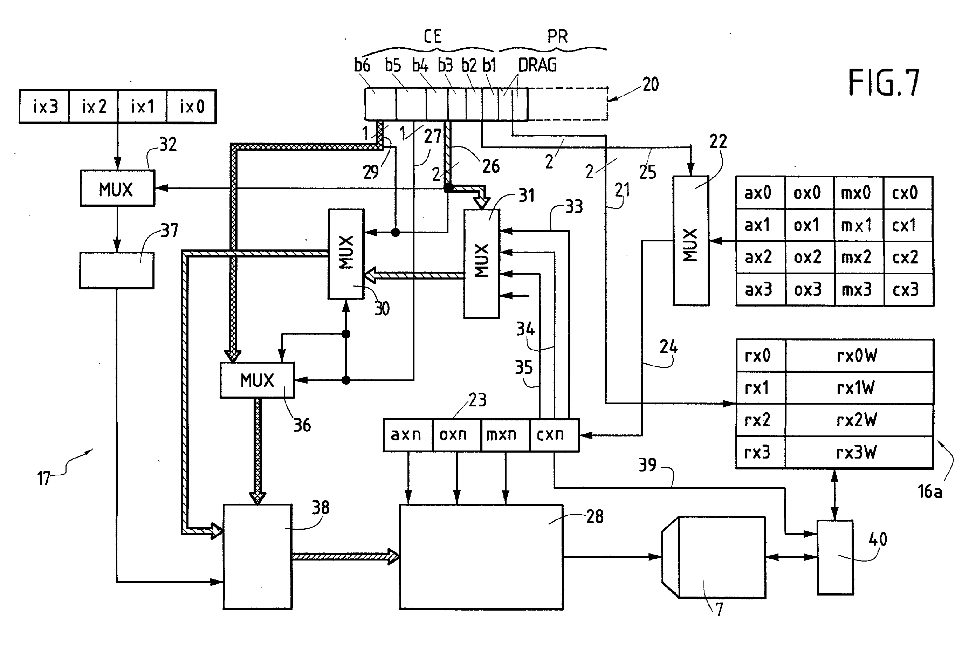

La figure 7 représente l'exécution d'un calcul d'adresse à l'aide d'un code d'opération prédéfini. Dans ce cas, le circuit de multiplexage et de transcodage 38 est transparent pour l'entrée provenant du multiplexeur 30 par l'intermédiaire de la valeur du bit b6 qui passe par le multiplexeur 36 positionné par la valeur du bit b5.

La valeur des bits b3 et b4 choisit l'une des opérations prédéfinies dans le registre de configuration cxn sélectionné par l'intermédiaire du multiplexeur 22 et placé dans le champ correspondant du registre temporaire 23. Le code correspondant traverse les multiplexeurs 31 et 30.

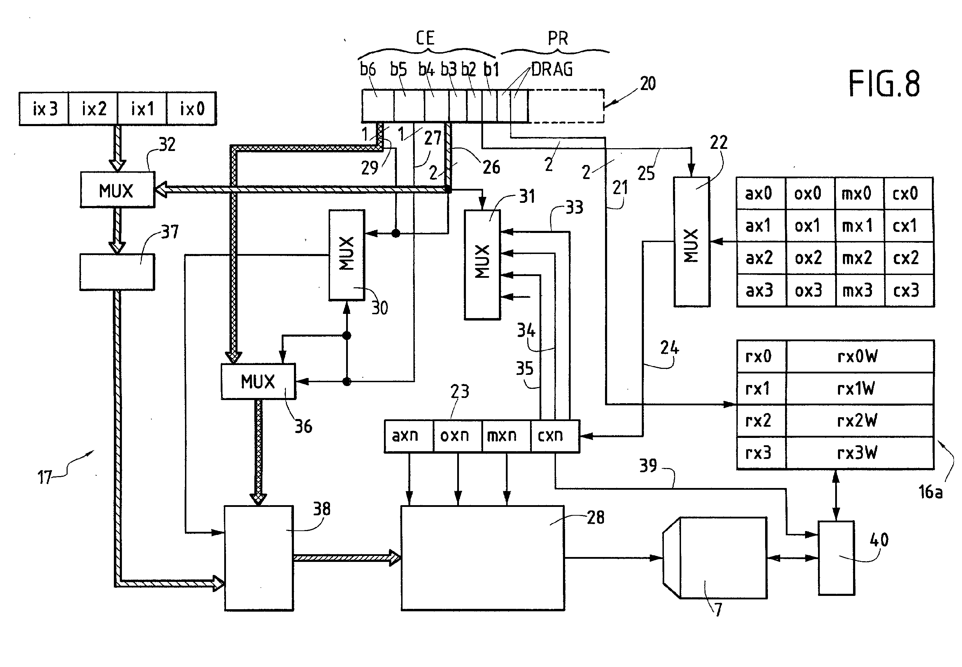

Dans le cas de la figure 8, le circuit de multiplexage et de transcodage 38 est transparent pour le contenu du registre temporaire 37 dans lequel est placé le contenu de l'un des registres étendus ix0 à ix3 à travers le multiplexeur 32. Ce dernier est positionné par la valeur des bits b3 et b4. La transparence du circuit 38 est assurée, comme dans le cas de la figure 7 par l'intermédiaire de la valeur du bit b5 qui transmet la valeur du bit b6 à ce circuit 38.

Dans ces conditions, le circuit de calcul d'adresse 28 travaillera avec l'instruction définie dans le registre étendu sélectionné en utilisant les codes spécifiés à titre d'exemple dans le tableau 2 ci-dessus.

On constate donc que pour définir le code d'élaboration d'adresses CE, chaque instruction de programme n'a besoin que de six bits auxquels sont affectées des fonctions doubles. Par exemple, les bits b3, b4 et b6 servent à la fois pour définir la valeur du code d'opération dans le mode de base et pour positionner des multiplexeurs dans le dispositif d'élaboration d'adresses. Les opérations plus complexes de calcul des adresses sont définies moyennant des registres dédiés comme les registres de configuration et d'instructions étendues, ce qui confère une grande souplesse aux possibilités de programmation, malgré le faible nombre de bits qui dans l'instruction de programme définissent le code d'élaboration des adresses. Il est à noter également que les contenus des registres en question peuvent à tout moment être remplacés par d'autres contenus au gré des besoins de l'exécution des algorithmes.

## Revendications

1. Dispositif (17, 18) d'élaboration d'adresses pour un processeur DSP (1) destiné à exécuter un programme dont les instructions de programme comprennent un code d'élaboration (CE) des adresses pour l'accès à au moins une mémoire (7, 8) associée à ce processeur (1), ce dispositif (6) comprenant:
- un jeu de registres d'adresse (ax0 à ax3; ay0 à ay3), associés chacun, le cas échéant, à un registre d'offset (ox0 à ox3; oy0 à oy3) et/ou à un registre de modulo (mx0 à mx3; my0 à my3),
- un circuit de calcul d'adresses (28) qui sur la base de codes d'opération chaque fois désignés par le code d'élaboration d'adresses (CE) des instructions et du contenu d'un registre d'adresse (ax0 à ax3; ay0 àay3) et éventuellement de ses registres associés (0x0 à ox3; oy0 à oy3; mx0 à mx3; my0 à my3), sélectionné parmi lesdits registres d'adresse, calcule chaque adresse d'accès à ladite mémoire (7, 8),
- chaque code d'élaboration (CE) de chaque instruction définissant l'un desdits codes d'opération à envoyer audit circuit de calcul (28) et désignant le registre d'adresse dont le contenu doit subir cette opération de calcul,
et des moyens de commande (22, 30, 31, 36, 38) qui en fonction dudit code d'élaboration, assurent sélectivement les transferts des contenus desdits registres et dudit code d'opération vers ledit circuit de calcul (28),
**caractérisé**
**en ce que** chacun desdits registres d'adresse (ax0 à ax3; ay0 à ay3) est associé en outre à un registre de configuration (cx0 à cx3; cy0 à cy3) qui est désigné en même temps que ce registre d'adresse par ledit code d'élaboration d'adresses (CE),
**en ce que** chacun desdits registres de configuration (cx0 à cx3; cy0 à cy3) contient au moins un jeu de codes d'opération prédéfinis(O à F), chaque code d'opération étant à même de commander une opération de calcul prédéterminée dans ledit circuit de calcul (28), et
**en ce que** lesdits moyens de commande (22, 30, 31, 36, 38) sont agencés pour transférer sélectivement, en fonction de la valeur d'au moins un premier bit (b3, b4) dudit code d'élaboration d'adresses, lesdits codes d'opération prédéfinis vers lesdits moyens de calcul (28).

2. Dispositif selon la revendication 2, **caractérisé en ce que** chaque registre de configuration (cx0 à cx3; cy0 à cy3) comprend une pluralité de champs contenant chacun un jeu de codes d'opération.

3. Dispositif selon la revendication 2, **caractérisé en ce que** chaque registre de configuration (cx0 à cx3; cy0 à cy3) comprend trois champs contenant chacun un jeu de codes d'opération et **en ce que** les codes d'opération sont définis sur quatre bits.

4. Dispositif selon l'une quelconque des revendications 1 à 3, **caractérisé**
**en ce qu'**il comprend en outre un jeu de registres d'instructions étendues (ix0 à ix3; iy0 à iy3) pour permettre sélectivement l'exécution d'opérations complexes de calcul d'adresses dans ledit circuit de calcul d'adresses (28) et
**en ce que** lesdits moyens de commande (22, 30, 31, 36, 38) sont également agencés pour,
- en fonction d'un second bit (b6) prédéterminé dudit code d'élaboration d'adresses (CE) desdites instructions de programme, transférer vers ledit circuit de calcul d'adresses (28), soit un code d'opération contenu dans l'un desdits registres de configuration (cx0 à cx3, cy0 à cy3) pour mettre en oeuvre une opération prédéfinie de calcul d'adresse, soit le contenu de l'un desdits registres d'instructions étendues (ix0 à ix3; iy0 à iy3) pour mettre en oeuvre une opération de calcul complexe défini par ce contenu, et
- en fonction, d'au moins un troisième bit (b3, b4) prédéterminé desdites instructions de programme, désigner l'un des registres d'instructions étendues dudit jeu de registres d'instructions étendues (ix0 à ix3; iy0 à iy3).

5. Dispositif selon les revendications 2 et 4, **caractérisé en ce que** lesdits premier et troisième bits (b3, b4) dudit code d'élaboration d'adresses (CE) occupent la même position dans ladite instruction de programme et sont utilisés pour désigner, en fonction de la valeur dudit second bit (b6), soit les champs desdits registres de configuration (cx0 à cx3, cy0 à cy3), soit un registre d'instructions étendues dans ledit jeu de registres d'instructions étendues (ix0 à ix3; iy0 à iy3).

6. Dispositif selon l'une quelconque des revendications précédentes, **caractérisé en ce que** lesdits moyens de commande (22, 30, 31, 36, 38) sont également agencés pour, en fonction de la valeur d'au moins un quatrième bit (b5) dudit code d'élaboration d'adresses (CE) appliqué audit circuit de calcul d'adresses (28), un code d'opération d'adresse désignant une pluralité d'opérations de calcul fréquentes lors de l'exécution dudit programme.

7. Dispositif selon les revendications précédentes prises ensemble, **caractérisé en ce que** lesdites opérations de calcul fréquentes sont définies par ledit premier (ou troisième; b3, b4) bit et ledit second bit (b6).

8. Dispositif selon la revendication 5, **caractérisé en ce que** le code d'élaboration d'adresse (CE) contient deux bits (b3, b4) pour la sélection desdits registres de configuration et desdits registres d'instructions étendues.

9. Dispositif selon l'une quelconque des revendications 1 à 8, pour un processeur DSP pouvant fonctionner sélectivement dans des modes de mots de données étroits et larges, ces mots de données pouvant être stockés temporairement dans au moins un jeu de registres d'application générale (rx0 à rx3; rx0w à rx3w; ry0 à ry3; ry0w à ry3w), **caractérisé en ce que** chacun desdits registres de configuration (cx0 à cx3, cy0 à cy3) comprend un champ définissant l'un ou l'autre de ces modes de mots de données.

10. Processeur DSP comprenant au moins un dispositif d'élaboration d'adresses (17, 18) selon l'une quelconque des revendications 1 à 9.
